# EUROPEAN PATENT SPECIFICATION

(11) **EP 3 227 398 B1**
(45) Date of publication and mention of the grant of the patent: **08.01.2020**
(21) Application number: 15805717.4
(22) Date of filing: 25.11.2015
(51) Int. Cl.: C09J 133/08, C08G 18/62, C09J 133/02, C09J 133/06, C09J 175/04, C08F 220/14, C08F 220/18

(54) **ACRYLIC ADHESIVES HAVING CHEMICAL RESISTANCE**
ACRYLKLEBSTOFFE MIT CHEMISCHER BESTÄNDIGKEIT
ADHÉSIFS ACRYLIQUES PRÉSENTANT UNE RÉSISTANCE CHIMIQUE

(30) Priority: 03.12.2014 US 201462086925 P
(43) Date of publication of application: 11.10.2017
(73) Proprietor: 3M Innovative Properties Company, St. Paul, MN 55133-3427 (US)
(72) Inventor: ZHU, Dong-Wei, Saint Paul, Minnesota 55133-3427 (US); ELLIOTT, Peter J., Saint Paul, Minnesota 55133-3427 (US); KETCHAM, Donald B., Saint Paul, Minnesota 55133-3427 (US); MA, Jingjing, Saint Paul, Minnesota 55133-3427 (US); TUMEY, Michael L., Saint Paul, Minnesota 55133-3427 (US)
(74) Representative: Gabriel, Kiroubagaranne
(86) International application number: PCT/US2015/062587
(87) International publication number: WO 2016/089687

(56) References cited:
- EP-A2- 2 631 279
- WO-A1-2013/133256
- US-A1- 2014 057 102

## Description

### TECHNICAL FIELD

Acrylic pressure sensitive adhesives that are resistant to a wide range of solvents, including both polar and non-polar solvents.

### BACKGROUND

Pressure sensitive adhesives ("PSA's") are often applied in a wide range of environments that can expose the PSA to materials that may adversely affect the PSA's bonding characteristics. Solvent resistance is one desirable property of a PSA that enables its use and application in environments subject to exposure to solvents. If a PSA is unable to resist a certain solvent, the solvent can be absorbed into the polymer where it can adversely impact the physical characteristics of the PSA, such as peel adhesion strength or shear resistance, and thereby result in reduced bonding strength and potentially, in a worst case scenario, delamination. Additionally, a PSA's resistance to solvents is not uniformly applicable to all solvents. For example, a PSA may be resistant to non-polar solvents but susceptible to polar solvents. The chemical structure of the PSA, the polarity of the solvent, or the solubility of the polymer with a given solvent may all impact a PSA's ability to resists a specific type of solvent.

### SUMMARY

This disclosure is directed at specific acrylic PSA, as defined in the claims, that are capable of resisting a broad array of solvents. Conventional PSA's currently available may be able to resist certain types or categories of solvents. However, the ability to withstand multiple categories of solvents with conventional PSA's generated from a significant amount of C₄-C₈ acrylate monomers (such as butyl acrylate and/or isooctyl acrylate) is presently unrecognized. It is desirable to offer a PSA that is capable of withstanding such diverse solvents such as water, a polar solvent, and oleic acid, a non-polar solvent. Certain embodiments of this disclosure are directed to acrylic PSA's primarily derived from C₁-C₄ acrylate monomers, and in particular methyl acrylate (a C₁ acrylate). Acrylic PSA's made in accordance with this disclosure exhibit a strong resistance to a wide array of solvents, including those solvents in the polar and non-polar solvents categories.

In one embodiment, an acrylic pressure sensitive adhesive derived from the reaction product of (i) 30 percent by weight to 50 percent by weight of a methyl acrylate, (ii) at least 40 percent by weight of a monomer comprising ethyl acrylate, propyl acrylate, butyl acrylate, or combinations thereof, (iii) about 0.2 percent by weight to about 5 percent by weight acrylic acid, and included in the polymerized mixture (iv) a crosslinking agent, exhibits an unexpected and superior improvement in its resistance to both polar and non-polar solvents over conventional acrylic PSA's while maintaining desirable adhesive qualities.

The resistance to certain solvents can be measured using a solvent swell test. The test measures the acrylic PSA's absorption of a selected solvent when immersed in that solvent for an extended period of time. The results are reported as a ratio of the acrylic PSA's gain in mass due to absorbed solvent over a baseline mass. In certain embodiments, the acrylic pressure sensitive adhesive of this disclosure exhibits a resistance to polar and non-polar solvents as demonstrated by a solvent swell ratio of 1.8 or less after immersion in a 1:1 water and isopropyl alcohol mixture in accordance with the Swelling Ratio Test and solvent swell ratio of 1.5 or less after immersion in oleic acid in accordance with the Swelling Ratio Test. The acrylic PSA has a peel adhesion strength of 0.7 N/mm or greater in accordance with the Peel Adhesion Test.

The acrylic PSA's of this disclosure may be polymerized using conventional monomer polymerization practices. In certain embodiments, free radical solvent polymerization is one method well suited to create the acrylic PSA's. Acrylic PSA's polymerized primarily from C₁-C₄ acrylate monomers, as embodied through this disclosure, may be applied to a substrate to form various articles. Substrates may include conventional polymeric substrates or webs.

### DETAILED DESCRIPTION

A composition comprising an acrylic PSA is derived from the reaction product of multiple monomeric or organic components. The following components are reported as a percent by weight for the total polymerizable mixture. The first component is a monomer comprising 30 percent by weight to 50 percent by weight of a methyl acrylate. A second component includes at least 40 percent by weight of a monomer selected from the group comprising ethyl acrylate, propyl acrylate, butyl acrylate, or combinations thereof. A third component comprises percent by weight to 5 percent by weight of acrylic acid. The reaction product of the noted components is an adhesive copolymer generally referred to as an acrylic PSA. Finally, a crosslinking agent is included in the polymerized mixture.

For purposes of this disclosure, a pressure sensitive adhesive or PSA can be identified by a means known as the Dahlquist criterion. This criterion defines a PSA as an adhesive having a 1 second creep compliance of greater than 1x10^{-6 cm2}/dyne as described in Handbook of PSA Technology, Donatas Satas (Ed.), 2nd Edition, p. 172, Van Nostrand Reinhold, New York, N.Y., 1989. Alternatively, since modulus is, to a first approximation, the inverse of creep compliance, PSA's may be defined as adhesives having a Young's modulus of less than 1x10⁶ dynes/cm². Another well-known means of identifying a PSA is that it is aggressively and permanently tacky at room temperature and firmly adheres to a variety of dissimilar surfaces upon mere contact without the need of more than finger or hand pressure, and which may be removed from smooth surfaces without leaving a residue as described in Glossary of Terms Used in the Pressure Sensitive Tape Industry provided by the Pressure Sensitive Tape Council, 1996. Another suitable definition of a suitable PSA is that it preferably has a room temperature storage modulus within the area defined by the following points as plotted on a graph of modulus versus frequency at 25 degrees centigrade : a range of moduli from approximately 2x10⁵ to 4x10⁵ dynes/cm² at a frequency of approximately 0.1 radians/sec (0.017 Hz), and a range of moduli from approximately 2x10⁶ to 8x10⁶ dynes/cm² at a frequency of approximately 100 radians/sec (17 Hz) (for example see Fig. 8-16 on p. 173 of Handbook of PSA Technology (Donatas Satas, Ed.), 2nd Edition, Van Nostrand Rheinhold, N.Y., 1989). Any of these methods of identifying a PSA may be used to identify suitable PSA's produced in accordance with this disclosure.

Methyl acrylate is one of the monomers components of the polymerizable mixture that enhances the ability of the resulting PSA to withstand solvents, particularly non-polar solvents. The methyl acrylate monomer is included in amount of 30 percent by weight to 50 percent by weight. One source of commercially available methyl acrylate is the Dow Chemical Company, Midland, MI.

An additional monomer component of the polymerizable mixture are C₂-C₄ acrylate monomers. The additional acrylate monomers impart the necessary PSA characteristics into the polymer. This is partially attributed to the low Tg properties of the monomers, which in some embodiments are below - 120 °C. The C₂-C₄ acrylate monomers include ethyl acrylate, propyl acrylate, butyl acrylate, or combinations thereof. The noted acrylate monomers are included in the polymerizable composition at at least 40 percent by weight.

In order to increase cohesive strength and provide a reaction site for crosslinking to improve solvent resistance of the PSA composition, functional acrylates may be incorporated into the polymeric chain during polymerization. For purposes of this disclosure, the functional acrylate is acrylic acid.

The functional monomer is 0.2 percent by weight to 5 percent by weight in the polymerizable composition.

The monomers can be polymerized by conventional techniques including, but not limited to, solvent polymerization, emulsion polymerization, and bulk polymerization. The monomer mixture may comprise a polymerization initiator, of a type and in an amount effective to polymerize the comonomers.

A crosslinking agent is generally included in the composition for subsequent crosslinking upon application of the polymer in its desired end state. For example, a crosslinking agent can be thermally activated after the coating of the polymerized components onto a backing. Upon activation, the crosslinking agent interacts with the functional moieties from the functional acrylate to improve cohesive strength and enhance solvent resistance. The crosslinking agent generally comprises compounds containing hydroxyl, carboxylic acid, isocyanate, azilidine or epoxy functional groups. Non-limiting example of crosslinking agents include aromatic polyisocyanates, such as DESMODUR L75, from Bayer Materialscience, Pittsburgh, PA, benzoyl peroxides, such as Luperox 75, from Arkema, Cary, NC., The crosslinking agent is included in the acrylic polymer in an amount of 0.1 to 2.0 percent by weight.

The acrylic PSAs may be self-tacky or, in alternative embodiments, may be tackified. Useful tackifiers for acrylic PSA's are rosin esters such as that available under the trade name FORAL 85 from Hercules, Inc., aromatic resins such as that available under the trade name PICCOTEX LC-55WK from Hercules, Inc., aliphatic resins such as that available under the trade name PICCOTAC 95 from Hercules, Inc., and terpene resins such as that available under the trade names PICCOLYTE A-115 and ZONAREZ B-100 from Arizona Chemical Co. Those of ordinary skill in the art with knowledge of this disclosure are capable of selecting an appropriate tackifier in an amount necessary to achieve desired end results for a selected application.

The acrylic PSA's produced in accordance with his disclosure can be employed to form tapes and transfer adhesive. Acrylic PSA articles may be prepared by coating the composition on a suitable support, such as a flexible backing. Non-limiting examples of materials that can be included in the flexible backing include polyolefins, such as polyethylene, polypropylene, polystyrene, polyester, polyvinyl chloride, polyurethane, polyvinyl alcohol, poly(ethylene terephthalate), poly(butylene terephthalate), poly(caprolactam), poly(vinylidene fluoride), polylactides, cellulose acetate, and ethyl cellulose and the like. Other non-limiting examples of commercially available backing materials include kraft paper, spun-bond polyolefins, porous films obtained from polyolefins, and multi-layered constructions.

Backings may also be prepared of fabric such as woven fabric formed of threads of synthetic or natural materials such as cotton, nylon, rayon, glass, ceramic materials, and the like or nonwoven fabric such as air laid webs of natural or synthetic fibers or blends of these. The backing may also be formed of metal, metalized polymer films, or ceramic sheet materials may take the form of any article conventionally known to be utilized with PSA compositions such as labels, tapes, signs, covers, marking indicia, and the like.

The above-described acrylic PSA compositions are coated on a substrate using conventional coating techniques modified as appropriate to the particular substrate. For example, these compositions can be applied to a variety of solid substrates by methods such as roller coating, flow coating, dip coating, spin coating, spray coating knife coating, and die coating. These various methods of coating allow the compositions to be placed on the substrate at variable thicknesses thus allowing a wider range of use of the compositions. Coating thicknesses may vary from a few microns to a few hundred microns. Those of ordinary skill in the art are capable of selecting an appropriate coating technique to match the backing and desired end use application.

The backing for the acrylic PSA may also comprise a release-coated substrate. Such substrates are typically employed when an adhesive transfer tape is provided. Examples of release-coated substrates are well known in the art and include, by way of example, silicone-coated kraft paper and the like.

The acrylic PSA of this disclosure resists both polar and non-polar solvents. Due to the potentially diverse applications, the acrylic PSA's may be exposed to a variety of different solvents including alcohol, skin oils such as sebum and oleic acid, water, hydrocarbon fluids, etc. This range of solvents represents both polar and non-polar solvents. Polar and non-polar solvents can be characterized by their solubility parameters. Non-polar, or lower polarity, solvents (eg. skin oils, hydrocarbons) have lower solubility parameters and polar, or higher polarity, solvents (eg. water, alcohol) have higher solubility parameters. Alternatively, one may consider characterizing polar a non-polar solvents by their respective dielectric constants.

One method of characterizing solvent resistance is by measuring the extent of swelling of the adhesive after it has been immersed in a given solvent for a period of time at a specified temperature. An acrylic PSA that exhibits a higher amount of swelling is certainly less resistant to that particular solvent. One method of characterizing solvent resistance is by measuring the extent of swelling of the adhesive after it has been immersed in a given solvent for some period of time. The higher the amount of swelling the less resistant to the solvent the material is considered to be. ASTM D543-06: "Standard Practices for Evaluating the Resistance of Plastics to Chemical Reagents" is one example of such a test. In the present disclosure, a method of characterizing swelling involves the Swelling Ratio Test, noted below in the Examples. Certain embodiments of acrylic PSA's of this disclosure exhibit a resistance to both polar and non-polar solvents. The resistance to both polar and non-polar solvents is demonstrated by a solvent swell ratio of 1.8 or less after immersion in a 1:1 water and isopropyl alcohol mixture in accordance with the Swelling Ratio Test and solvent swell ratio of 1.5 or less after immersion in oleic acid in accordance with the Swelling Test. Conventional acrylic PSA's generally do not exhibit such a strong resistance to both types of solvents.

The acrylic PSA's ability to resist a wide array of solvents is not the only defining attribute of the composition of this disclosure. The acrylic PSA's necessarily maintain a sufficient level of adhesion. The acrylic PSA has at least a 1 second creep compliance of greater than 1x10^{-6 cm2}/dyne. Adhesion characteristics are determined through peel adhesion testing. Some embodiments of the acrylic PSA exhibit a peel adhesion strength of 0.7 N/mm or greater in accordance with the Peel Adhesion Test. The Peel Adhesion Test is noted below in the Examples.

The Tg of the acrylic PSA's are generally higher than conventional acrylic PSA's. For example, acrylic PSA's produced according to this disclosure exhibit a Tg of about -20 °C, while other conventional PSA's may be as low as -40 °C.

The acrylic PSA's disclosed herein are well suited for application areas that include health care such as, for example, wound dressings and garment attachments; industrial such as, for example, floor marking tapes and window sealing tapes; and personal safety items such as for example, protective clothing. The acrylic PSA's solvent resistant characteristics over different types of solvents render it particularly suited for the noted applications.

### EXAMPLES

**Table 1. MATERIALS**

| | |
|---|---|
| MA | Methyl acrylate, from The Dow Chemical Company, Midland, MI |
| BA | Butyl acrylate, from The Dow Chemical Company, Midland, MI |
| AA | Acrylic Acid, from The Dow Chemical Company, Midland, MI |
| HEA | 2-Hydroxyethyl acrylate, from The Dow Chemical Company, Midland, MI |
| ICN | DESMODUR L75, is an aromatic polyisocyanate based on toluene diisocyanate. approximately 75% in ethyl acetate, having an equivalent weight of approximately 315; available from Bayer Materialscience, Pittsburgh, PA |
| BPO | Benzoyl peroxide, Luperox 75, from Arkema, Cary, NC |
| VAZO 67 | Initiator, 2,2'azobis-(2-methylbutyronitrile), from Du Pont, Wilmington, DE |
| OA | Oleic acid |
| IPA | Isopropyl alcohol |
| IPA/W | IPA and water mixture, 50/50 by weight |
| EtOAc | Ethyl acetate |
| T-30 Release Liner | Polyester releaser liner, Eastman Chemical Co. St. Louis, MO |
| BIS | 5% solution in toluene bisamide crosslinker, 3M, St. Paul, MN |
| PET Film | 1.5 mil PET films from Mitsubishi Polyester Film, Inc, Greer, SC |

### PREPARATION OF EXAMPLE 1 (REFERENCE EXAMPLE)

**Polymerization:** A one-liter glass bottle was charged with BA (50 g), MA (50 g), HEA (0.20 g), EtOAc (146 g), IPA (4.0 g) and VAZO-67 (0.250 g). The bottle was purged with nitrogen to remove oxygen and then sealed. The sealed bottle was placed in a water bath heated to 60 °C. The sealed bottle was then rotated for 24 hours. A clear and viscous polymer solution was obtained.

**Coating:** A portion of the polymer solution (26.8 g) was mixed with Desmodur L-75 (0.21 g) and EtOAc (10 g) in a glass jar until a homogeneous solution was obtained. This solution was then coated on to a T-30 polyester release liner at a thickness of about 50 microns and dried in a 65 °C oven for 30 minutes to form a pressure sensitive adhesive tape.

**Swelling Ratio Test:** A portion of the dry adhesive polymer (0.50-1.00 g dry) was separated from the release liner, weighed and then placed in a glass vial. Two samples in glass vials were prepared. A solvent of IPA (5 g) and water (5 g) was added to one of the glass vials to completely immerse the sample. In the second glass vial, a solvent of oleic acid (10 g) was added to completely immerse the sample. Both vials were sealed and placed in an oven maintained at a temperature of 65°C for a period of 24 hours. The glass vials were removed from the oven and allowed to cool to ambient temperature. The soaked samples were taken out from the vials, wiped reasonably dry with tissue paper, and weighed. The swelling ratio for each sample was determined by taking the dry weight of each sample over its weight after soaking in the solvent.

**Peel Adhesion Test:** A pressure sensitive adhesive tape was produced by laminating the above coated sample onto the PET film described in the Materials table above. A sample measuring 12.5 millimeters wide by 30.5 cm long was cut and the release liner removed. The exposed adhesive surface of the adhesive tape was adhered along the length of a stainless steel plate (Type 304 having a bright annealed finish, obtained from Chemlnstruments, Incorporated, Fairfield, OH) measuring 5.1 cm wide by 12.7 cm long by 0.12 centimeters thick using a 2.0 kg rubber roller and five passes to provide a test specimen. The plate was cleaned prior to applying the tape by wiping with acetone once then with heptane three times using a tissue paper (trade designation KIMWIPE the tape sample by first, available from Kimberly-Clark Corporation, Irving, TX). After conditioning at 23 °C and 50% RH for 24 hours the test samples were evaluated for peel adhesion strength using a tensile tester (MTS Insight, available from MTS Systems, Corporation, Eden Prairie, MN) equipped with 1000 N load cell, using a crosshead speed of 30.5 cm/minute, at an angle of 180° with the test specimen held in the bottom clamp and the tail in the top clamp. The average of two test specimens was reported in N/millimeter (N/mm).

### PREPARATION OF COMPARATIVE EXAMPLES 1-2.

Two comparative examples were prepared and evaluated using exactly the same method set forth above for Example 1 however, the adhesive polymer composition for each comparative example was different. The specific compositions of comparative examples 1 and 2 are fully detailed in Table 2.

**Table 2. Experimental Formulations and results for Examples 1-6 and Comparative Examples 1-3.**

| | Peel Adhesion, N/mm | BA | MA | AA | 2HEA | BIS | BPO | ICN | Swell Ratio | |
|---|---|---|---|---|---|---|---|---|---|---|
| | | | | | | | | | OA | IPA/W |
| Example 1 | 1.42 | 50 | 50 | - | 0.2 | - | - | 1.5 | 1.2 | 1.7 |
| Example 2 | 0.82 | 69 | 30 | 1 | - | 0.2 | - | - | 1.3 | 1.5 |
| Example 3 | 0.96 | 67 | 30 | 3 | - | 0.2 | - | - | 1.3 | 1.5 |
| Example 4 | 0.95 | 65 | 30 | 5 | - | 0.2 | - | - | 1.3 | 1.6 |
| Example 5 | 1.13 | 50 | 48 | 2 | 0.2 | 0.4 | - | 1.5 | 1.1 | 1.8 |
| Example 6 | 1.17 | 48 | 50 | 2 | - | 0.2 | 0.2 | - | 1.1 | 1.8 |
| Comparative Example 1 | 1.47 | 28 | 70 | 2 | - | 0.4 | - | - | 1.3 | 2.3 |
| Comparative Example 2 | 1.37 | - | 98 | 2 | - | 0.4 | - | - | 1.2 | 3.0 |
| Comparative Example 3 | --- | 90 | - | 10 | - | 0.4 | 0.4 | - | >5 | not measured |

The data of Table 2 indicates that the compositions of Examples 1-5, produced in accordance with this disclosure, demonstrate a desirable resistance to both polar and non-polar solvents. The Comparative Examples 1-3, failed either in polar or non-polar solvent swelling test.

## Claims

1. A composition comprising an acrylic pressure sensitive adhesive derived from the reaction product of:
a) 30 percent by weight to 50 percent by weight of methyl acrylate,
b) at least 40 percent by weight of a monomer comprising ethyl acrylate, propyl acrylate, butyl acrylate, or combinations thereof,
c) 0.2 percent by weight to 5 percent by weight of acrylic acid, wherein the weight percentages are based on the total weight of the polymerizable mixture; and included in the polymerized mixture
d) 0.1 percent by weight to 2 percent by weight with respect to the acrylic polymer of a crosslinking agent.

2. A composition according to claim 1, wherein the crosslinking agent comprises compounds containing functional groups selected from hydroxy, carboxylic, isocyanate, epoxy and aziridine.

3. A composition according to claim 1, wherein the acrylic pressure sensitive adhesive exhibits a resistance to polar and non-polar solvents as demonstrated by a solvent swell ratio of 1.8 or less after immersion in a 1:1 water and isopropyl alcohol mixture in accordance with the Swelling Ratio Test described in the experimental section and solvent swell ratio of 1.5 or less after immersion in oleic acid in accordance with the Swelling Ratio Test described in the experimental section of the description.

4. A composition according to claim 1, wherein the acrylic pressure sensitive adhesive exhibits a peel adhesion strength of 0.7 N/mm or greater in accordance with the Peel Adhesion Test described in the experimental section of the description.

5. An article comprising an acrylic pressure sensitive adhesive assembly having a substrate and an acrylic pressure sensitive adhesive layer disposed on at least a portion of a surface of the substrate, wherein the acrylic pressure sensitive adhesive is the reaction product of:
a) 30 percent by weight to 50 percent by weight of methyl acrylate,
b) at least 40 percent by weight of a monomer comprising ethyl acrylate, propyl acrylate, butyl acrylate, or combinations thereof,
c) 0.2 to 5 percent by weight of acrylic acid, wherein the weight percentages are based on the total weight of the polymerizable mixture; and included in the polymerized mixture
d) 0.1 percent by weight to 2 percent by weight with respect to the acrylic polymer of a crosslinking agent.

6. An article according to claim 5, wherein the acrylic pressure sensitive adhesive exhibits a resistance to polar and non-polar solvents as demonstrated by a solvent swell ratio of 1.8 or less after immersion in a 1:1 water and isopropyl alcohol mixture in accordance with the Swelling Ratio Test described in the experimental section of the description and solvent swell ratio of 1.5 or less after immersion in oleic acid in accordance with the Swelling Ratio Test described in the experimental section of the description.

7. An article according to claim 5, wherein the acrylic pressure sensitive adhesive exhibits a peel adhesion strength of 0.7 N/mm or greater in accordance with the Peel Adhesion Test as described in the experimental section of the description.

8. An article according to claim 5, wherein the substrate comprises a polyolefins, polystyrene, polyester, polyvinyl chloride, polyvinyl alcohol, poly(ethylene terephthalate), poly(butylene terephthalate), poly(caprolactam), poly(vinylidene fluoride), polylactides, polyurethane, cellulose acetate, ethyl cellulose or combinations thereof.

9. A method for preparing a pressure sensitive adhesive comprising polymerizing (a) 30 percent by weight to 50 percent by weight of methyl acrylate, (b) at least 40 percent by weight of a monomer comprising ethyl acrylate, propyl acrylate, butyl acrylate, or combinations thereof, and (c) 0.2 percent by weight to 5 percent by weight of acrylic acid, wherein the percentages are based on the total weight of the polymerizable mixture.

10. A method according to claim 9, wherein the pressure sensitive adhesive additionally comprise 0.1 percent by weight to 2 percent by weight of a crosslinking agent containing functional groups selected from hydroxy, carboxylic, isocyanate, epoxy and aziridine, wherein the percent by weight is calculated with respect to the acrylic polymer.

11. A method according to claim 9, wherein the acrylic pressure sensitive adhesive exhibits a resistance to polar and non-polar solvents as demonstrated by a solvent swell ratio of 1.8 or less after immersion in a 1:1 water and isopropyl alcohol mixture in accordance with the Swelling Ratio Test described in the experimental section of the description and solvent swell ratio of 1.5 or less after immersion in oleic acid in accordance with the Swelling Ratio Test described in the experimental section of the description.

12. A method according to claim 9, wherein the acrylic pressure sensitive adhesive exhibits a peel adhesion strength of 0.7 N/mm or greater in accordance with Peel Adhesion Test described in the experimental section of the description.

13. A method according to claim 9, wherein polymerizing comprises solution polymerization, emulsion polymerization, or bulk polymerization.

## Patentansprüche

1. Eine Zusammensetzung, umfassend einen druckempfindlichen Acrylklebstoff, abgeleitet von dem Reaktionsprodukt aus:
a) zu 30 Gew.-% bis 50 Gew.-% Methylacrylat,
b) zu mindestens 40 Gew.-% ein Monomer, umfassend Ethylacrylat, Propylacrylat, Butylacrylat oder Kombinationen davon,
c) zu 0,2 Gew.-% bis 5 Gew.-% Acrylsäure, wobei die Gewichtsprozentsätze auf das Gesamtgewicht des polymerisierbaren Gemisches bezogen sind; und im polymerisierten Gemisch enthalten
d) zu 0,1 Gew.-% bis 2 Gew.-% in Bezug auf das Acrylpolymer ein Vernetzungsmittel.

2. Eine Zusammensetzung nach Anspruch 1, wobei das Vernetzungsmittel Verbindungen umfasst, die funktionelle Gruppen enthalten, ausgewählt aus Hydroxy, Carboxyl, Isocyanat, Epoxy und Aziridin.

3. Eine Zusammensetzung nach Anspruch 1, wobei der druckempfindliche Acrylklebstoff einen Widerstand gegen polare und nicht-polare Lösungsmittel zeigt, demonstriert durch eine Lösungsmittel-Quellrate von 1,8 oder weniger nach Eintauchen in ein 1:1-Wasser-Isopropylalkohol-Gemisch gemäß dem im experimentellen Abschnitt beschriebenen Quellratentest und eine Lösungsmittel-Quellrate von 1,5 oder weniger nach Eintauchen in Ölsäure gemäß dem im experimentellen Abschnitt der Beschreibung beschriebenen Quellratentest.

4. Eine Zusammensetzung nach Anspruch 1, wobei der druckempfindliche Acrylklebstoff eine Schälhaftfestigkeit von 0,7 N/mm oder größer gemäß dem im experimentellen Abschnitt der Beschreibung beschriebenen Schälhafttest zeigt.

5. Ein Artikel, der eine druckempfindliche Acrylklebstoffanordnung umfasst, die ein Substrat aufweist, und eine druckempfindliche Acrylklebstoffschicht, die auf zumindest einem Teil einer Oberfläche des Substrats angeordnet ist, wobei der druckempfindliche Acrylklebstoff das Reaktionsprodukt ist aus:
a) zu 30 Gew.-% bis 50 Gew.-% Methylacrylat,
b) zu mindestens 40 Gew.-% ein Monomer, umfassend Ethylacrylat, Propylacrylat, Butylacrylat oder Kombinationen davon,
c) zu 0,2 bis 5 Gewichtsprozent Acrylsäure, wobei die Gewichtsprozentsätze auf das Gesamtgewicht der polymerisierbaren Mischung bezogen sind; und im polymerisierten Gemisch enthalten
d) zu 0,1 Gew.-% bis 2 Gew.-% in Bezug auf das Acrylpolymer ein Vernetzungsmittel.

6. Ein Artikel nach Anspruch 5, wobei der druckempfindliche Acrylklebstoff einen Widerstand gegen polare und nicht-polare Lösungsmittel zeigt, demonstriert durch eine Lösungsmittel-Quellrate von 1,8 oder weniger nach Eintauchen in ein 1:1-Wasser-Isopropylalkohol-Gemisch gemäß dem im experimentellen Abschnitt der Beschreibung beschriebenen Quellratentest und eine Lösungsmittel-Quellrate von 1,5 oder weniger nach Eintauchen in Ölsäure gemäß dem im experimentellen Abschnitt der Beschreibung beschriebenen Quellratentest.

7. Ein Artikel nach Anspruch 5, wobei der druckempfindliche Acrylklebstoff eine Schälhaftfestigkeit von 0,7 N/mm oder größer gemäß dem im experimentellen Abschnitt der Beschreibung beschriebenen Schälhafttest zeigt.

8. Ein Artikel nach Anspruch 5, wobei das Substrat Polyolefine, Polystyrol, Polyester, Polyvinylchlorid, Polyvinylalkohol, Poly(ethylenterephthalat), Poly(butylenterephthalat), Poly(caprolactam), Poly(vinylidenfluorid), Polylactide, Polyurethan, Celluloseacetat, Ethylcellulose oder Kombinationen davon umfasst.

9. Ein Verfahren zum Herstellen eines druckempfindlichen Klebstoffes, umfassend das Polymerisieren von (a) zu 30 Gew.-% bis 50 Gew.-% Methylacrylat, (b) zu mindestens 40 Gew.-% ein Monomer, das Ethylacrylat, Propylacrylat, Butylacrylat oder Kombinationen davon umfasst, und (c) zu 0,2 Gew.-% bis 5 Gew.-% Acrylsäure, wobei sich die Prozentangaben auf das Gesamtgewicht des polymerisierbaren Gemisches beziehen.

10. Ein Verfahren nach Anspruch 9, wobei der druckempfindliche Klebstoff zusätzlich zu 0,1 Gew.-% bis 2 Gew.-% ein Vernetzungsmittel umfasst, das funktionelle Gruppen enthält, ausgewählt aus Hydroxy, Carboxyl, Isocyanat, Epoxy und Aziridin, wobei die Gewichtsprozentsätze in Bezug auf das Acrylpolymer berechnet sind.

11. Ein Verfahren nach Anspruch 9, wobei der druckempfindliche Acrylklebstoff einen Widerstand gegen polare und nicht-polare Lösungsmittel zeigt, demonstriert durch eine Lösungsmittel-Quellrate von 1,8 oder weniger nach Eintauchen in ein 1:1-Wasser-Isopropylalkohol-Gemisch gemäß dem im experimentellen Abschnitt der Beschreibung beschriebenen Quellratentest und eine Lösungsmittel-Quellrate von 1,5 oder weniger nach Eintauchen in Ölsäure gemäß dem im experimentellen Abschnitt der Beschreibung beschriebenen Quellratentest.

12. Ein Verfahren nach Anspruch 9, wobei der druckempfindliche Acrylklebstoff eine Schälhaftfestigkeit von 0,7 N/mm oder größer gemäß dem im experimentellen Abschnitt der Beschreibung beschriebenen Schälhafttest zeigt.

13. Verfahren nach Anspruch 9, wobei das Polymerisieren Lösungspolymerisation, Emulsionspolymerisation oder Massepolymerisation umfasst.

## Revendications

1. Composition comprenant un adhésif sensible à la pression acrylique dérivé du produit de réaction de :
a) 30 pour cent en poids à 50 pour cent en poids d'acrylate de méthyle,
b) au moins 40 pour cent en poids d'un monomère comprenant de l'acrylate d'éthyle, de l'acrylate de propyle, de l'acrylate de butyle, ou des combinaisons de ceux-ci,
c) 0,2 pour cent en poids à 5 pour cent en poids d'acide acrylique, dans lequel les pourcentages en poids sont sur la base du poids total du mélange polymérisable ; et inclus dans le mélange polymérisé
d) 0,1 pour cent en poids à 2 pour cent en poids par rapport au polymère acrylique d'un agent de réticulation.

2. Composition selon la revendication 1, dans laquelle l'agent de réticulation comprend des composés contenant des groupes fonctionnels choisis parmi hydroxy, carboxylique, isocyanate, époxy et aziridine.

3. Composition selon la revendication 1, dans laquelle l'adhésif sensible à la pression acrylique présente une résistance aux solvants polaires et apolaires telle que démontrée par un taux de gonflement au solvant de 1,8 ou moins après immersion dans un mélange 1:1 d'eau et d'alcool isopropylique conformément au test de taux de gonflement décrit dans la section expérimentale et un taux de gonflement au solvant de 1,5 ou moins après immersion dans de l'acide oléique conformément au test de taux de gonflement décrit dans la section expérimentale de la description.

4. Composition selon la revendication 1, dans laquelle l'adhésif sensible à la pression acrylique présente une résistance d'adhésion au pelage de 0,7 N/mm ou plus conformément au test d'adhésion au pelage tel que décrit dans la section expérimentale de la description.

5. Article comprenant un ensemble adhésif sensible à la pression acrylique ayant un substrat et une couche d'adhésif sensible à la pression acrylique disposée sur au moins une partie d'une surface du substrat, dans lequel l'adhésif sensible à la pression acrylique est le produit de réaction de :
a) 30 pour cent en poids à 50 pour cent en poids d'acrylate de méthyle,
b) au moins 40 pour cent en poids d'un monomère comprenant de l'acrylate d'éthyle, de l'acrylate de propyle, de l'acrylate de butyle, ou des combinaisons de ceux-ci,
c) 0,2 à 5 pour cent en poids d'acide acrylique, dans lequel les pourcentages en poids sont sur la base du poids total du mélange polymérisable ; et inclus dans le mélange polymérisé
d) 0,1 pour cent en poids à 2 pour cent en poids par rapport au polymère acrylique d'un agent de réticulation.

6. Article selon la revendication 5, dans lequel l'adhésif sensible à la pression acrylique présente une résistance aux solvants polaires et apolaires telle que démontrée par un taux de gonflement au solvant de 1,8 ou moins après immersion dans un mélange 1:1 d'eau et d'alcool isopropylique conformément au test de taux de gonflement décrit dans la section expérimentale de la description et un taux de gonflement au solvant de 1,5 ou moins après immersion dans de l'acide oléique conformément au test de taux de gonflement décrit dans la section expérimentale de la description.

7. Article selon la revendication 5, dans lequel l'adhésif sensible à la pression acrylique présente une résistance d'adhésion au pelage de 0,7 N/mm ou plus conformément au test d'adhésion au pelage tel que décrit dans la section expérimentale de la description.

8. Article selon la revendication 5, dans lequel le substrat comprend des polyoléfines, du polystyrène, du polyester, du poly(chlorure de vinyle), de l'alcool polyvinylique, du poly(téréphtalate d'éthylène), du poly(téréphtalate de butylène), du poly(caprolactame), du poly(fluorure de vinylidène), des polylactides, du polyuréthane, de l'acétate de cellulose, de l'éthylcellulose ou des combinaisons de ceux-ci.

9. Procédé de préparation d'un adhésif sensible à la pression comprenant la polymérisation (a) de 30 pour cent en poids à 50 pour cent en poids d'acrylate de méthyle, (b) d'au moins 40 pour cent en poids d'un monomère comprenant de l'acrylate d'éthyle, de l'acrylate de propyle, de l'acrylate de butyle, ou des combinaisons de ceux-ci, et (c) de 0,2 pour cent en poids à 5 pour cent en poids d'acide acrylique, dans lequel les pourcentages sont sur la base du poids total du mélange polymérisable.

10. Procédé selon la revendication 9, dans lequel l'adhésif sensible à la pression comprend en outre 0,1 pour cent en poids à 2 pour cent en poids d'un agent de réticulation contenant des groupes fonctionnels choisis parmi hydroxy, carboxylique, isocyanate, époxy et aziridine, dans lequel le pourcentage en poids est calculé par rapport au polymère acrylique.

11. Procédé selon la revendication 9, dans lequel l'adhésif sensible à la pression acrylique présente une résistance aux solvants polaires et apolaires telle que démontrée par un taux de gonflement au solvant de 1,8 ou moins après immersion dans un mélange 1:1 d'eau et d'alcool isopropylique conformément au test de taux de gonflement décrit dans la section expérimentale de la description et un taux de gonflement au solvant de 1,5 ou moins après immersion dans de l'acide oléique conformément au test de taux de gonflement décrit dans la section expérimentale de la description.

12. Procédé selon la revendication 9, dans lequel l'adhésif sensible à la pression acrylique présente une résistance d'adhésion au pelage de 0,7 N/mm ou plus conformément au test d'adhésion au pelage tel que décrit dans la section expérimentale de la description.

13. Procédé selon la revendication 9, dans lequel la polymérisation comprend une polymérisation en solution, une polymérisation en émulsion ou une polymérisation en masse.
